# EUROPEAN PATENT APPLICATION

(11) **EP 4 472 056 A1**
(43) Date of publication of application: **04.12.2024**
(21) Application number: 23382516.5
(22) Date of filing: 31.05.2023
(51) Int. Cl.: H02N 11/00, H02N 1/04

(54) **LOW-BIAS VOLTAGE INTRUSION-EXTRUSION ELECTRIC GENERATOR**

(71) Applicant: Fundación Centro de Investigación Cooperativa de Energías Alternativas, CIC Energigune Fundazioa, 01510 Vitoria-Gasteiz, Álava (ES); Università Degli Studi Di Ferrara, 44121 Ferrara (IT)
(72) Inventor: GROSU, Yaroslav, E-01510 Vitoria-Gasteiz, Álava (ES); BARTOLOMÉ MARQUÉS, Luis Ángel, E-01510 Vitoria-Gasteiz, Álava (ES); MELONI, Simone, 44121 Ferrara (IT)
(74) Representative: ABG Intellectual Property Law, S.L.

(57) **Abstract**

The present invention refers to a durable and robust intrusion/extrusion generator cell, to an energy storage and/or delivery system comprising said cell, to a method of storing and/or delivering electricity comprising said cell, and to the use of the cell and the system to store or deliver electricity. The asymmetric configuration of the porous material inside the generator cell (being much closer to one of the electrodes than to the other one) allows generating electricity with low or even zero bias voltage, thus, preventing the degradation of the porous material.

## Description

### TECHNICAL FIELD

The present invention relates to the field of electric generators. More specifically, the present invention relates to the field of intrusion-extrusion electric generators.

### BACKGROUND

Due to the increased energy consumption and demand worldwide, new devices and methods must be created to store and transform renewable energy. One of the approaches in this field is based on the ability to convert mechanical energy into electricity. However, mechanical energy storage technologies such as flywheel, compressed air and pumped hydro-energy are usually large and bulky, require a lot of space and have limited applications in a confined area.

Intrusion (wetting)/extrusion (drying) of fluids in/from lyophobic porous solids is known in many fields, including chromatography, nanofluidics, biology, and energy materials. At present it represents an attractive process for energy applications. Researchers have investigated many different combinations of fluids and porous solids. For example, Grosu et al. (ACS Appl Mater Interfaces. 2017, 03, 9(8), 7044-7049) described a pronounced electrification effect upon a reversible cycle of forced water intrusion-extrusion in nanoporous hydrophobic materials (ZIF-8 and WC8), when testing a cell wherein the nanoporous hydrophobic material was placed at an equal distance between its two electrodes and while applying a constant voltage of up to 4 V between those electrodes.

Also, Lowe et al. (ACS Appl. Mater. Interfaces 2019, 11, 43, 40842-40849) used a highpressure electrical cell filled with a suspension of water and different nanoporous materials, such as superhydrophobic grafted silica and two metal-organic frameworks (MOFs), placed at an equal distance between the two electrodes of said cell. The generation of electrical energy was tested on said cell upon intrusion-extrusion cycles while applying a constant voltage of 1 V between the electrodes. Results showed that the flexibility of a porous material can be efficiently used to exploit the dynamic hysteresis of water intrusion-extrusion.

Despite the promising results obtained by the above-mentioned prior art generators, the present inventors have found that those systems showed a quick degradation of the porous material, drastically reducing the number of the working cycles of their cells. Additionally, maintaining a constant and relatively elevated voltage between the electrodes implies energy consumption, that represents a practical inconvenience as an external source of electrical energy is required.

Therefore, it is desirable to develop intrusion-extrusion generator cells having an increased durability and overall performance. Even more desirable is to have a passive scheme that does not imply a bias voltage between electrodes, and hence does not require external electrical energy source, or at least a pseudo-passive scheme with only needs a small external source producing a low bias voltage.

### BRIEF DESCRIPTION OF THE INVENTION

The inventors of the present invention have developed an intrusion-extrusion electric generator cell comprising two electrodes separated from each other by a gap and wherein a porous material that is suitable for intrusion/extrusion of a pressure transmission fluid is placed on said gap being in contact or in close proximity with only one of the two electrodes. Thus, the porous material is placed on said gap at a different distance between the two electrodes (being much closer to one of the electrodes than to the other one). It has been found surprisingly that the asymmetric configuration of the generator cell of the invention allows generating electricity with low or even zero bias voltage, thus, resulting in a reduced degradation and a high stability of said porous material. Thus, the generator cell of the invention, by working with a low or even with a zero bias voltage, is more durable and robust that the intrusion-extrusion generators of the art that typically require constant voltages of at least 1 V. Moreover, the proposed low-bias voltage cell is able to provide a pronounced voltage generation during intrusion-extrusion cycles and a stable amplitude of the generated voltage.

Thus, a first aspect of the invention is directed to a generator cell (1) comprising two electrodes (2, 3) separated from each other by a gap (4), said gap comprising a porous material (5) suitable for intrusion/extrusion of a pressure transmission fluid, wherein the cell is adapted for containing and circulating the pressure transmission fluid into the gap (4),
and wherein the cell is characterized in that the porous material (5) is in contact or in close proximity with only one of the two electrodes (2), thus being capable of generating electricity with a bias voltage ranging from 0 to 0.1 V.

In a second aspect, the invention is directed to an energy storage and/or delivery system comprising:
- at least one generator cell (1) of the invention in any of its particular embodiments,
- a compression-decompression fluid device adapted for pumping a pressure transmission fluid in and out of the gap (4) of the at least one generator cell (1); wherein the cell and the compression-decompression fluid device are in fluidic communication; and
- wherein the cell forms part of an electric circuit which optionally comprises a voltage source that applies a bias voltage of at most 0.1 V.

In a third aspect, the present invention is directed to a method of storing and/or delivering electricity comprising the steps of:
a) providing
   - a generator cell (1) of the invention in any of its particular embodiments or the system of the invention in any of its particular embodiments; and
   - a pressure transmission fluid;
b) compressing the pressure transmission fluid to reach a pressure inside the cell (1) such that the pressure transmission fluid intrudes into the porous material (5);
c) decompressing the pressure transmission fluid to reach a pressure inside the cell (1) such that said pressure transmission fluid extrudes out of the porous material (5); and
d) optionally repeating steps (b) and (c).

In yet another aspect of the present invention is directed to the use of the generator cell or the energy storage and/or delivery system of the present invention to store or deliver electricity.

### FIGURES

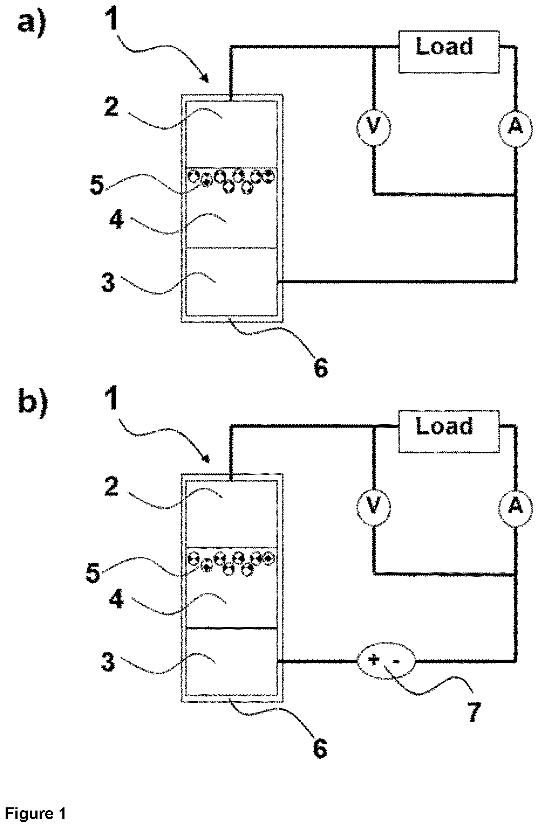

**Figure 1****.** Scheme of a system comprising an asymmetric generator cell in a (a) passive configuration; and in (b) active configuration with non-low bias voltage source (> 0.1 V) (comparative). The circuit comprises a load resistance in series with an ammeter and a voltmeter in parallel for measuring the electricity generated during the experimental tests but these elements are not necessary for the real application. Instead of resistor, ammeter and a voltmeter, the circuit will normally comprise a final useful load.

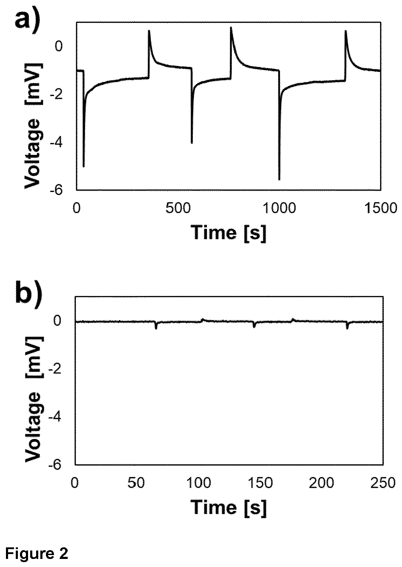

**Figure 2****.** Voltage vs time results for (a) an asymmetric generator cell in a passive configuration and for (b) an asymmetric cell working in the passive configuration system but having being previously used in an active configuration system during several intrusion-extrusion cycles (comparative example 2).

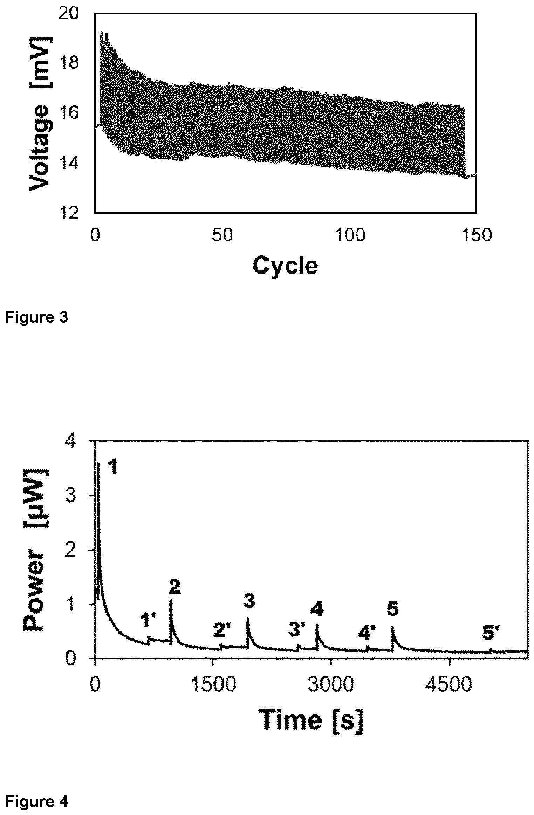

**Figure 3****.** Voltage vs cycles results for 150 intrusion-extrusion cycles of an asymmetric generator cell working in a passive configuration.
**Figure 4****.** Electrical power vs time results for an intrusion-extrusion experiment during the first 5 cycles with a generator cell with a symmetric distribution of the porous material between the electrodes and working with a bias voltage of 1 V (prior art comparative example 3).

### Reference Numerals of Drawings

- 1: Generator cell
- 2, 3: Electrodes
- 4: Gap
- 5: Porous material
- 6: Case
- 7: Non-low bias voltage source (> 0.1 V)

### DETAILED DESCRIPTION OF THE INVENTION

Unless defined otherwise, all technical and scientific terms used herein have the same meaning as commonly understood to one of ordinary skill in the art to which this disclosure belongs. As used herein, the singular forms "a" "an" and "the" include plural reference unless the context clearly dictates otherwise.

### Generator cell

The generator cell (1) of the present invention comprises two electrodes (2, 3) separated from each other by a gap or space (4) situated between them.

In the context of the present invention the term "electrodes" refers to positive and negative electrodes of the cell of the invention. The electrodes (2, 3) of the invention comprise, at least, a positive electrode and a negative electrode. Both electrodes (2, 3) may have connection terminals that may be electrically connected to them by a connection wire through which electrons are able to travel.

The electrodes (2, 3) of the generator cell (1) may be made of the same or of different material. In an embodiment, one or both electrodes (2, 3) are made of stainless steel. In a more particular embodiment, one or both electrodes (2, 3) are made of stainless steel SS316.

The electrodes (2, 3) may be placed in any arrangement. For instance, the electrodes (2, 3) may be disposed parallelly, perpendicularly or forming an angle between them. In a particular embodiment, the electrodes (2, 3) are substantially parallel or form an angle of less than 45°, preferably less than 15°. In another particular embodiment, the electrodes (2, 3) are substantially perpendicular each other. Preferably, the electrodes (2, 3) are substantially parallel each other.

The generator cell (1) of the present invention is an intrusion-extrusion electric generator cell, i.e. a cell able to generate electrical energy based on the intrusion-extrusion phenomena. To this end, the gap (4) comprises a porous material (5) suitable for intrusion/extrusion of a pressure transmission fluid upon compression/decompression of the fluid.

The terms "intrusion" and "extrusion" are used in the context of the present invention in accordance with their normal meaning in the art. The term "intrusion" refers to the pressure transmission fluid entering the pores or cavities of the porous material by overcoming capillarity or other forces, upon application of an external force (caused by for example, sufficient pressure, heat or other perturbing external stresses).

The term "extrusion" is understood as opposite action of intrusion and refers to the pressure transmission fluid exiting the pores or cavities of the porous material when the external force (caused by for example, sufficient pressure, heat or other perturbing external stresses) decreases or stops.

The gap (4) of the generator cell (1) of the present invention comprises a porous material (5), closer to one of the electrodes than to the other one, in which the pressure transmission fluid may intrude into and extrude out during compression/decompression cycles.

In an embodiment, the gap of the generator cell (1) of the present invention further comprises a pressure transmission fluid. In a more particular embodiment, the pressure transmission fluid fills the gap (4) of the generator cell (1) and the porous material (5) is submerged or immersed in said fluid.

In an embodiment, the gap (4) between the two electrodes of the generator cell (1) of the present invention consists of a porous material (5) suitable for intrusion-extrusion of a pressure transmission fluid and a pressure transmission fluid; wherein the porous material (5) is submerged or immersed in said pressure transmission fluid.

In an alternative embodiment, the gap (4) between the two electrodes of the generator cell (1) of the present invention is filled by the porous material (5) suitable for intrusion-extrusion of a pressure transmission fluid and the pressure transmission fluid; wherein the porous material (5) is submerged or immersed in said pressure transmission fluid.

Alternatively, the pressure transmission fluid may be provided separately and introduced in the generator cell (1) for working.

The pressure transmission fluid is normally a liquid such as water or an aqueous electrolyte solution. For simplicity, the fluid is herein termed as pressure transmission fluid, although its intrusion/extrusion in/from the porous material may be achieved by different external stresses, not only pressure, as known for the skilled person and as discussed herein.

The porous material (5) is lyophobic with respect to the pressure transmission fluid, i.e. has little or no chemical affinity for the pressure transmission fluid and therefore exhibits intrusion-extrusion cycle with it. For example, if the liquid is water or an aqueous electrolyte solution, the lyophobic material is hydrophobic. Lyophobicity of the porous material of the invention with respect to the pressure transmission fluid may be measured by any method known in the art; preferably by contact angle measurements i.e. by measuring the contact angle of a drop of fluid deposited on the surface of said porous material, if the contact angle is greater than 90 degrees said material is lyophobic and if the contact angle is greater than 150 degrees said material is superlyophobic. When the fluid used is water or an aqueous solution and produces said contact angles, the material may be specifically named as hydrophobic and superhydrophobic, respectively.

In the context of the present invention, the term "porous material" refers to a material that has porosity or void fraction which is a measure of the void (i.e. "empty") spaces in a material, and is a fraction of the volume of voids over the total volume, express as being between 0 and 1, or as a percentage between 0% and 100%.

In a particular embodiment the porous material (5) of the invention is a microporous, mesoporous, or macroporous material or any mixture thereof. Preferably, the porous material (5) of the invention is a nanoporous material and more preferably a mesoporous material.

In the context of the present invention and in accordance with the IUPAC recommendations, the term "microporous material" refers to a material having pores of between 0.2 and 2 nm of pore size, the term "mesoporous material" refers to a material having pores of between 2 and 50 nm of pore size, the term "macroporous material" refers to a material having pores above 50 nm of pore size, and the term "nanoporous material" refers to a material having pores below 100 nm of pore size. That is, nanoporous embraces the other three categories, but with an upper limit of 100 nm.

The porosity of the porous material (5) may be measured using methods known in the art, such as nitrogen adsorption methods.

Any porous material which exhibits intrusion-extrusion cycle with the pressure transmission fluid may be used in the present invention. In an embodiment, the porous material (5) comprises silica, alumina, aluminosilicate, zeolite, metal-organic framework (MOF) [including the subclass of Zeolitic Imidazolate Frameworks (ZIFs)], covalent-organic framework (COF), porous vitreous materials or a mixture thereof; preferably silica, alumina, aluminosilicate or a mixture thereof; more preferably silica.

In a more particular embodiment, the porous material (5), such as silica, is a porous material grafted, preferably with a lyophobic compound. This lyophobic compound is normally an organic compound. In a more particular embodiment, the lyophobic compound is a perhaloalkane; preferably a perfluoroalkane, more preferably a linear or branched perfluoroalkane containing from 1 to 10 carbon atoms; even more preferably a linear or branched perfluoroalkane containing from 5 to 9 carbon atoms; even much more preferably a linear or branched perfluoroalkane containing 8 carbon atoms.

In a particular embodiment, the pressure transmission fluid is water and the porous material (5) is functionalized or grafted silica, preferably silica grafted with a perhaloalkane (e.g. perfluoroalkane).

In another particular embodiment, the pressure transmission fluid is water and the porous material (5) is a MOF such as a ZIF.

The prior art systems [see e.g. Grosu et al. (ACS Appl Mater Interfaces. 2017, 03, 9(8), 7044-7049; Lowe et al. (ACS Appl. Mater. Interfaces 2019, 11, 43, 40842-40849] use generator cells where the porous materials are placed at an equal distance between the two electrodes, which is herein referred to as "symmetric configuration", "symmetric scheme" or the like. In this configuration, unless a significant bias voltage is applied, there is no electrification as there is no potential difference between the electrodes during the intrusion-extrusion process. This represents a drawback because of energy consumption.

In sharp contrast to the systems proposed in the prior art, in the generator cell of the present invention the porous material (5) is in contact or in close proximity with only one of the two electrodes (2), which is herein referred to as "asymmetric configuration", "asymmetric scheme" or the like. As used in this specification the term "close proximity" means that the porous material (5) is sufficiently close to one of the two electrodes (2) and sufficiently distant from the other one (3) so as to generate a difference of potentials between the electrodes (2, 3) during the intrusion-extrusion process (compression/decompression of the pressure transmission fluid), thus producing electrification without any bias voltage or with a low bias voltage of up to 0.1 V.

That is, this asymmetric location of the porous material generates a difference of potentials between the electrodes, thus being able to work in a circuit with a zero or low bias voltage ranging from 0 to 0.1 V. In a preferred embodiment, the cell may operate with a bias voltage ranging from 0 to 0.09 V, from 0 to 0.08 V, from 0 to 0.07 V or from 0 to 0.06 V. More preferably, the cell may operate with a bias voltage ranging from 0 to 0.05 V, from 0 to 0.04 V, or from 0 to 0.03 V. Even more preferably, the cell may operate with a bias voltage ranging from 0 to 0.02 V and most preferred from 0 to 0.01 V. In a specific embodiment, the bias voltage is 0, i.e. there is no external power supply in the circuit. As used herein, the terms "passive" and "pseudo-passive" refer to a configuration contemplated in the present invention with bias voltage of 0 V and with a low bias voltage of above 0 V to 0.1 V, respectively, whereas "active" refers to prior art configurations involving non-low bias voltages.

The absence of a conventional bias voltage (i.e. > 0.1 V) between the electrodes of the cell advantageously results in a better energy efficiency along with a reduced degradation and a high stability of the porous material.

The generator cell (1) is adapted for containing and circulating the pressure transmission fluid into the gap (4) between the electrodes (2, 3).

In a particular embodiment, the generator cell (1) comprises a compartment adapted for containing and circulating the pressure transmission fluid into the gap (4) between the electrodes (2, 3). In a more particular embodiment, the compartment is made of a polymeric material such as polytetrafluoroethylene (PTFE).

The generator cell (1) of the invention may be configured to storage and deliver energy and to be reversibly charged and discharged.

### System

In a second aspect, the invention is directed to an energy storage and/or delivery system comprising at least one of the generator cell (1) of the invention in any of its particular embodiments; a compression-decompression fluid device adapted for pumping a pressure transmission fluid in and out of the gap (4) of the at least one generator cell (1), wherein the cell and the compression-decompression fluid device are in fluidic communication; and wherein the cell forms part of or is connected to an electric circuit which optionally comprises a voltage source that applies a bias voltage of at most 0.1 V.

In a particular embodiment, the compression-decompression fluid device is a pressure-volume-temperature (PVT) device or a pump.

In an embodiment, the generator cell (1) and the compression-decompression fluid device are in fluidic communication through an opening of the cell.

As previously noted, the asymmetric configuration of the generator cell of the invention allows generating electricity with low or even zero bias voltage. In a particular embodiment, the electrical circuit of the energy storage and/or delivery system of the present invention comprises a voltage source that applies a bias voltage of at most 0.1 V, preferably at most 0.09 V, at most 0.08 V, at most 0.07 V, at most 0.06 V, at most 0.05 V, at most 0.04 V, at most 0.03 V, at most 0.02 V, at most 0.01 V or even without the assistance of any external voltage source (i.e. bias voltage = 0 V).

The electrical circuit of the energy storage and/or delivery system of the present invention normally comprises one or a plurality of loads such as one or more lighting devices, one or more electronic devices and/or one or more motors.

In an embodiment, the electrical circuit of the energy storage and/or delivery system of the present invention may comprise a resistance, an ammeter and/or a voltmeter for measuring the electrical energy generated.

### Method

In a third aspect, the present invention is directed to a method of storing and/or delivering electricity comprising the steps of:
a) providing
   - a generator cell (1) of the invention in any of its particular embodiments or the system of the invention in any of its particular embodiments; and
   - a pressure transmission fluid;
b) compressing the pressure transmission fluid to reach a pressure inside the cell (1) such that the pressure transmission fluid intrudes into the porous material (5);
c) decompressing the pressure transmission fluid to reach a pressure inside the cell (1) such that said pressure transmission fluid extrudes out of the porous material (5); and
d) optionally repeating steps (b) and (c) one or more times.

The compression of step (b) and the decompression of step (c) of the pressure transmission fluid is done by applying (i.e. increasing) or removing (i.e. reducing or stopping) external stresses. In a particular embodiment, the compression of step (b) and the decompression of step (c) of the pressure transmission fluid is done by applying or removing pressure, temperature or an external electromagnetic field; preferably by applying or removing pressure or temperature to the pressure transmission fluid; more preferably by applying or removing pressure.

The amount of external stress for achieving intrusion/extrusion will depend primarily on the porous material (5) used and can be easily determined by the skilled person.

In a particular embodiment, the compression of step (b) of the pressure transmission fluid is done by applying pressure to the pressure transmission fluid and the decompression of step (c) is performed by removing the pressure applied in the previous step.

In a more particular embodiment, the compression of step (b) of the pressure transmission fluid is done by applying a pressure of at least 10 MPa, at least 20 MPa, at least 30 MPa or at least 40 MPa to the pressure transmission fluid.

In a more particular embodiment, the compression of step (b) of the pressure transmission fluid is done by applying a pressure of between 10 and 100 MPa to the pressure transmission fluid; preferably between 10 and 80 MPa; more preferably of between 10 and 70 MPa.

In a particular embodiment, the compression of step (b) of the pressure transmission fluid (5) is done by applying temperature to the pressure transmission fluid and the decompression of step (c) is performed by removing the temperature applied in the previous step.

In a more particular embodiment, the compression of step (b) of the pressure transmission fluid is done by applying a temperature of at least 90 °C to the pressure transmission fluid; preferably of at least 60 °C.

In a more particular embodiment, the compression of step (b) of the pressure transmission fluid is done by applying a temperature of between 10 and 90 °C to the pressure transmission fluid; preferably between 30 and 60 °C.

### Uses

In yet another aspect of the present invention is directed to the use of the generator cell or the energy storage and/or delivery system of the present invention to store or deliver electricity.

An additional aspect of the present invention is directed to a method for storing or delivering electricity comprising the generator cell or the energy storage and/or delivery system of the present invention.

To this end, the generator cell of the present invention may be used individually, as modular system, or in combination with other energy storage technologies and may be integrated into or with various systems and/or devices to improve efficiency, address energy demands, etc.

Furthermore, the generator cell of the invention may be used in a variety of applications having different energy delivery and/or storage needs, including, but not limited to, very large scale applications (e.g., utilities, functioning as a green energy source for a smart grid, energy storage for use in combination with renewable energy resources such as wind and solar power, etc.) and smaller applications (e.g. backup power, residential power, electromobility sector, etc.).

Throughout the description and claims the word "comprises" and variations of the word, are not intended to exclude other technical features, additives, components or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

### EXAMPLES

### EXAMPLE 1: Passive configuration with asymmetric distribution of porous material

In the present example, a generator cell was tested in an intrusion-extrusion system comprising said cell, a pressure-volume-temperature (PVT) device and an electrical circuit. This system is referred to as "passive configuration" because of the absence of any power supply (see scheme of Fig. 1a).

The generator cell comprised a cylindrical case (130×∅40 mm) (6) filled with distilled water as pressure transmission liquid. The cell further comprised two cylindrical stainless-steel electrodes (10×∅12 mm), one electrode (2) in direct contact with a porous material (5), and a counter electrode (3). Both electrodes were made of the same material SS316. As can be seen in figure 1a, the porous material of the cell is only in contact with one of the electrodes (2) while being immersed in water. Thus, the porous material is much closer to one of the electrodes than to the other one, and indeed it only contacts one of the two electrodes of the cell.

The porous material used was powder silica (DAVISIL^{®} 150 Chromatographic Silica) which was previously grafted with perflouroalkane (CₙF₂ₙ₊₁, n=8). Said cell also comprised a pass-through cap for connecting the electrodes to the rest of the circuit using wires.

The cell was connected to the pressure-volume-temperature (PVT) device via a highpressure Swagelok thread. The PVT device comprised a 89 MPa flow module (NEMESYS for Ultra High Pressure) which pumped a stainless-steel 10 ml syringe (CETONI NEM-B506-01 B). The water flow into and out to the cell was controlled by the software (QmixElements).

The electrical circuit comprised a load resistance in series with an ammeter and a voltmeter in parallel but, as stated above, no power supply. The ammeter and voltmeter measurements were performed by a National Instruments (NI) module NI-9219 located in a USB compactDAQ chassis logging the data using the software LabVIEW SignalExpress.

Several intrusion-extrusion tests were performed on the cell using the system described above under a passive configuration. The electrification tests consisted in compression/decompression or intrusion-extrusion cycles between atmospheric pressure and 30 MPa at a water flow rate of 0.3 ml/s (around 10 MPa/s). During the tests, the pressure, current and voltage data were logged synchronously.

Results showed that the cell working in the passive configuration system (see the scheme in Figure 2a) resulted in a pronounced voltage generation during water intrusion-extrusion cycles. In addition, Figure 3 shows that the amplitude of the generated voltage remained stable after approximately 150 intrusion-extrusion cycles.

In summary, results showed that a generator cell comprising porous material (5) in direct contact with only one of the two electrodes of the generator cell, leads to a pronounced voltage generation during water intrusion-extrusion cycles and to a stable amplitude of the generated voltage after approximately 150 intrusion-extrusion cycles.

In the present invention, the location of the porous material layer in the cell, in contact with or close to just one electrode, provides asymmetry to the circuit, which generates a difference of potentials between the electrodes. Therefore, the fact that the porous material of the cell only contacts one of the two electrodes, makes unnecessary the use of a conventional bias voltage between the electrodes, thus, leading to a reduced degradation and a high stability of said porous material during its use as showed in figure 3. This is an advantage of the generator cell of the present invention in comparison with cells using porous materials being in contact with two electrodes that need a non-low bias voltage to be able to work.

### COMPARATIVE EXAMPLE 2: Active configuration with asymmetric distribution of porous material

The same generator cell of example 1 was tested for comparative purposes in a similar system as the one on example 1 but with a power supply (7) connected between the counter electrode and the rest of the electrical circuit. This configuration is referred to as "active configuration" (see Fig. 1b). The active configuration was able to provide a bias voltage between the electrodes of the cell of about 0.5 V.

Figure 2b shows the voltage vs time results of the cell working in the passive configuration system but having being previously used in an active configuration system during 10 intrusion-extrusion cycles. As showed in figure 2b, after 10 water intrusion-extrusion cycles using the cell in the active configuration system (with a bias voltage of 0.5 V), a degradation of electrification was observed. In addition, figure 2b shows a reduction of the produced voltage of orders of magnitude under the passive scheme with respect to the cell that have not been previously subjected to cycling under the active scheme (see the difference between Figure 2a vs Figure 2b).

Thus, in sharp contrast with results of example 1, as showed in Figure 2b, the use of an active configuration with a non-low bias voltage between the electrodes of the cell, even under an asymmetric distribution, results in a pronounced degradation of the porous material of the cell and thus, in the reduction of the produced voltage.

### COMPARATIVE EXAMPLE 3: Active configuration with symmetric distribution of porous material

The generator cell disclosed by Lowe A. et al. (Lowe, A., Tsyrin, N., Chor 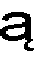 żewski, M., Zajdel, P., Mierzwa, M., Leão, J.B., Bleuel, M., Feng, T., Luo, D., Li, M. and Li, D., 2019. Effect of flexibility and nanotriboelectrification on the dynamic reversibility of water intrusion into nanopores: pressure-transmitting fluid with frequency-dependent dissipation capability. ACS applied materials & interfaces, 11(43), pp.40842-40849) was tested for comparative purposes using the same porous material as in Example 1. This scheme implies a homogeneous distribution of porous material between the two electrodes and a non-low bias voltage of 1 V ("active configuration").

Figure 4 shows the electrical power vs time for the intrusion-extrusion experiment with this generator cell. In that figure, intrusion steps are represented by a number and extrusion steps are represented by a number and an apostrophe. As can be seen in figure 4, with each intrusion-extrusion cycle the peak amplitude is reduced, which is related to degradation of the organic grafting of the porous material. Thus, as showed in Figure 4 the use of a generator cell comprising two electrodes both contacting the porous material and under an active configuration with a bias voltage between those electrodes, results in a pronounced degradation of the porous material of the cell and thus, in the reduction of the produced voltage.

## Claims

1. A generator cell (1) comprising two electrodes (2, 3) separated from each other by a gap (4), said gap comprising a porous material (5) suitable for intrusion/extrusion of a pressure transmission fluid, wherein the cell is adapted for containing and circulating the pressure transmission fluid into the gap (4),
and wherein the cell is **characterized in that** the porous material (5) is in contact or in close proximity with only one of the two electrodes (2), thus being capable of generating electricity with a bias voltage ranging from 0 to 0.1 V.

2. The cell according to claim 1, wherein the porous material comprises silica, alumina, aluminosilicate, zeolite, metal-organic framework, covalent-organic framework, porous vitreous materials or a mixture thereof.

3. The cell according to claim 2, wherein the porous material comprises silica, alumina, aluminosilicate or a mixture thereof.

4. The cell according to any one of claims 1 to 3, wherein the porous material is grafted with a perhaloalkane; preferably with a perfluoroalkane.

5. The cell according to any one of claims 1 to 4, wherein the porous material (4) is silica grated with perfluoroalkane.

6. The cell according to any one of claims 1 to 5, further comprising the pressure transmission fluid.

7. The cell according to claim 6, wherein the pressure transmission fluid is an aqueous electrolyte or water.

8. The cell according to any one of claims 1 to 7, wherein one or both electrodes (2, 3) are made of stainless steel.

9. An energy storage and/or delivery system comprising
- at least one generator cell (1) according to any one of claims 1 to 8,
- a compression-decompression fluid device adapted for pumping a pressure transmission fluid in and out of the gap of the at least one generator cell (1);
wherein the cell and the compression-decompression fluid device are in fluidic communication; and
- wherein the cell forms part of an electric circuit which optionally comprises a voltage source that applies a bias voltage of at most 0.1 V.

10. The energy storage and/or delivery system according to claim 9, which comprises no voltage source.

11. A method of storing and/or delivering electricity comprising the steps of:
a) providing
- a generator cell (1) according to any one of claims 1 to 8 or the system according to any one of claims 9-10; and
- a pressure transmission fluid;
b) compressing the pressure transmission fluid to reach a pressure inside the cell (1) such that the pressure transmission fluid intrudes into the porous material (5);
c) decompressing the pressure transmission fluid to reach a pressure inside the cell (1) such that said pressure transmission fluid extrudes out of the porous material (5); and
d) optionally repeating steps (b) and (c).

12. The method according to claim 11, wherein the compression of step (b) and the decompression of step (c) of the pressure transmission fluid is done by applying and removing pressure, temperature or an external electromagnetic field.

13. Use of the cell according to any one of claims 1 to 8 to store and/or deliver electricity.

14. Use of the system according to any one of claims 9-10 to store and/or deliver electricity.
